# FASCICULE DE BREVET EUROPEEN

(11) **EP 0 373 043 B1**
(45) Date de publication et mention de la délivrance du brevet: **16.03.1994**
(21) Numéro de dépôt: 89403318.2
(22) Date de dépôt: 30.11.1989
(51) Int. Cl.: G06F 13/40, G06F 11/00

(54) **Système électronique à plusieurs unités amovibles**
Elektronisches System mit mehreren abnehmbaren Einheiten
Electronic system with several removable units

(30) Priorité: 09.12.1988 FR 8816194
(43) Date de publication de la demande: 13.06.1990
(73) Titulaire: BULL S.A., 92800 Puteaux (FR)
(72) Inventeur: Ahn, Claude, F-75016 Paris (FR); Chikli-Pariente, Robert, F-75016 Paris (FR); Marbot, Rolland, F-75016 Paris (FR)
(74) Mandataire: Colombe, Michel

(56) Documents cités:
- EP-A- 0 241 905
- MICROPROCESSING & MICROPROGRAMMING, vol. 21, no. 1-5, août 1987, pages 333-338, Amsterdam, NL, R. Vogt: "Improving the Teliability of Bus Systems: Fault Isolation and Fault Tolerance"
- PATENT ABSTRACTS OF JAPAN, vol. 8, no. 159 (P-289)(1596), 24 juillet 1984.
- PATENT ABSTRACTS OF JAPAN, vol. 8, no. 147 (P-285)(1584), 10 juillet 1984.

## Description

L'invention concerne les systèmes électroniques comportant une pluralité d'unités dont certaines sont reliées entre elles par un bus commun de communication. Comme exemple de système de ce type, on peut citer le sous-système central d'un ordinateur.

Les différentes unités de ces systèmes se présentent généralement sous la forme de cartes électroniques reliées électriquement à un bus, habituellement appelé "bus de fond de panier", par l'intermédiaire d'un connecteur. Ce connecteur présente notamment l'avantage de faciliter les opérations de maintenance lorsqu'on veut remplacer une carte défectueuse. Bien entendu, un même système peut posséder plusieurs bus.

Le bus sur lequel sont branchées certaines des unités du système comporte généralement des lignes fonctionnelles servant à véhiculer les signaux numériques entre les cartes. Il comporte également des lignes d'alimentation et des lignes de maintenance spécialisées dans la transmission de signaux de maintenance.

Les lignes fonctionnelles du bus réalisent les liaisons entre les émetteurs et les récepteurs des cartes branchées sur ce bus. Une ligne fonctionnelle déterminée peut donc être reliée à plusieurs émetteurs et à plusieurs récepteurs appartenant à des cartes différentes. Ainsi, lorsque le système est en fonctionnement, la connexion ou la déconnexion d'une des cartes du système risque de perturber les signaux échangés sur le bus.

En effet, des parasites peuvent être provoqués par des effets de ligne ainsi que des effets de rebond des contacts du connecteur. De plus, l'état des émetteurs d'une carte manipulée est incertain et ceux-ci peuvent émettre des signaux non désirés. D'autre part, la connexion d'une carte peut produire des perturbations dues à l'appel de courant d'alimentation lors de la mise sous tension.

La plupart des systèmes électroniques actuels et en particulier les systèmes informatiques sont réalisés de façon modulaire pour permettre des extensions de puissance ou de capacité mémoire. Par exemple, un sous-système central d'ordinateur comporte plusieurs cartes processeur, plusieurs cartes mémoire et plusieurs cartes de contrôleur d'entrée-sortie. Cette technique modulaire permet aussi de faire fonctionner le système en mode dégradé en cas de défaillance d'une ou de plusieurs cartes.

Cependant, lorsque la défaillance d'une carte a été détectée, le service de maintenance doit intervenir pour la remplacer. Cette opération est généralement réalisée au moyen d'un dispositif de maintenance comprenant un processeur de service et agissant sur les unités de traitement et les mémoires de façon à sauvegarder si possible les données et à isoler la carte à remplacer. Ainsi, l'article "Improving the Reliability of Bus Systems: Fault Isolation and Fault Tolerance", R. Vogt, publié dans "Microprocessing & Microprogramming, vol. 21, n° 1-5, août 1987, pages 333-338, Amsterdam, Pays-Bas décrit un système composé de plusieurs modules reliés chacun à un bus par l'intermédiaire d'interrupteurs. Des unités de contrôle ont pour tâche de détecter et localiser les défaillances des modules et de commander les interrupteurs pour isoler du bus les modules défectueux.

Cette disposition permet donc au système de continuer à fonctionner en mode dégradé. Néanmoins, il sera ensuite nécessaire de procéder au remplacement des unités défectueuses afin de replacer le système dans sa configuration normale. Pour cela, le système est arrêté pendant l'opération de remplacement. L'agent de maintenance commande ensuite le processeur de service pour qu'il relance le système.

Bien que cette méthode garantisse que les manipulations de la carte n'entraînent pas de perturbations d'ordre électrique donc de fausses informations dans le système, elle nécessite d'interrompre totalement le fonctionnement du système pendant une période indéterminée. Or, cette interruption s'accompagne généralement de l'arrêt définitif des programmes en cours d'exécution et par conséquent ces programmes doivent être réexécutés complètement après une réinitialisation du système. Il en résulte d'importantes perturbations à l'égard des utilisateurs. De plus, l'interruption du fonctionnement du système peut être inacceptable pour les applications nécessitant une disponibilité absolue du système. On est alors conduit à prévoir de coûteux systèmes redondants tels que des bisystèmes.

La demande européenne EP-A-0 241 905 décrit , par example un système permettant l'insertion d'une carte sur un bus sans arêter ledit système Néanmoins, le fonctionnerment du bus en question doit être stoppé.

Aussi l'invention a pour but de proposer une solution moins coûteuse en prévoyant un système qui permet d'effectuer les opérations de remplacement de cartes sans interrompre totalement son fonctionnement.

Plus précisément, l'invention a pour objet un système électronique comportant au moins un bus pour relier entre elles plusieurs unités du système, chaque unité coopérant avec un dispositif de maintenance, une ou plusieurs desdites unités étant connectées audit bus de façon amovible, des premiers moyens commandés sélectivement par ledit dispositif de maintenance étant prévus pour assurer l'isolement fonctionnel desdites unités amovibles, ledit système étant caractérisé en ce que pour pouvoir effectuer la déconnexion ou la connexion desdites unités amovibles sans interrompre le fonctionnement des unités respectivement restant connectées ou déjà connectées au bus, des seconds moyens sont prévus dans les dispositifs de réception desdites unités pour leur permettre de fonctionner soit selon un mode de fonctionnement normal, soit selon un mode qui procure auxdits dispositifs de réception une immunité accrue aux perturbations, lesdits seconds moyens étant commandés par ledit dispositif de maintenance.

On connaît diverses solutions pour améliorer l'immunité des circuits aux perturbations. En ce qui concerne les récepteurs, on peut prévoir un circuit du type filtre permettant de le rendre insensible aux impulsions parasites. Il convient de noter que l'introduction d'un filtre dans un récepteur abaisse la bande passante de celui-ci et il conviendra d'adapter le mode d'émission en conséquence. En mode de transmission asynchrone, cette adaptation se fait automatiquement car l'émission est conditionnée par la réception de signaux d'acquittement délivrés par les récepteurs.

Dans le cas de signaux numériques, on peut également envisager l'utilisation de codes correcteurs d'erreurs permettant de corriger des erreurs isolées. Une autre solution peut consister à provoquer la répétition des signaux émis de façon à détecter et à corriger les erreurs pouvant être causées par des perturbations.

Parmi ces possibilités, il convient de choisir celle dont la mise en oeuvre est la plus simple possible aussi bien en ce qui concerne la réalisation des circuits permettant l'immunité aux perturbations que celle des circuits de commande associés.

Aussi selon un mode de réalisation de l'invention, le système électronique est caractérisé en ce que chacun desdits dispositifs de réception comporte un récepteur servant au fonctionnement normal et appelé récepteur rapide, ainsi qu'un récepteur auxiliaire muni de moyens de filtrage et appelé récepteur lent et en ce que ledit dispositif de maintenance interdit le fonctionnement desdits récepteurs rapides lorsqu'il autorise le fonctionnement desdits récepteurs lents et réciproquement et en ce que les dispositifs d'émission sont commandés pour fonctionner en mode lent pendant le fonctionnement des récepteurs lents et en mode rapide pendant le fonctionnement des récepteurs rapides.

Le plus souvent les systèmes numériques sont synchrones et comportent donc une horloge commune servant à synchroniser les signaux échangés. Aussi, selon un mode de réalisation particulier de l'invention, les modes de fonctionnement lent ou rapide des émetteurs peuvent être obtenus en modifiant la fréquence de l'horloge. A fréquence normale, les émetteurs sont en mode rapide et il suffit d'abaisser la fréquence pour passer en mode lent.

Selon une autre caractéristique de réalisation de l'invention, chaque récepteur comprend d'une part un inverseur à trois états, correspondant au fonctionnement rapide, et d'autre part un trigger de Schmitt à trois états. Le fonctionnement lent ou rapide du récepteur peut ainsi être choisi en plaçant respectivement à l'état de haute impédance l'inverseur ou le trigger de Schmitt. L'utilisation d'un trigger de Schmitt comme récepteur lent présente l'avantage de pouvoir fixer des seuils de déclenchement inférieurs et supérieurs pour la prise en compte des signaux reçus.

Pour obtenir les caractéristiques de filtrage que l'on s'impose, il convient aussi de fixer la bande passante des récepteurs lents. Pour cela, on pourrait prévoir un filtre auxiliaire associé au trigger de Schmitt. Cependant, cette solution complique la réalisation des récepteurs. Pour remédier à cet inconvénient et selon une autre caractéristique de réalisation de l'invention, les caractéristiques de filtrage désirées pour chaque récepteur lent sont obtenues simplement en agissant sur le dimensionnement des composants constituant le trigger de Schmitt de façon à augmenter sa constante de temps. Bien entendu, ce dimensionnement tiendra compte des caractéristiques de charge du récepteur qui elles-même dépendent de la technologie utilisée. Par exemple, en technologie MOS ou CMOS, les impédances de charge étant essentiellement capacitives, il suffira d'augmenter la résistance des transistors utilisés.

Toutes les mesures mentionnées précédemment ont pour but de rendre insensibles les récepteurs aux perturbations pouvant être provoquées par la déconnexion ou connexion d'une carte. Cependant, les moyens de filtrage pénalisent la rapidité du système d'autant plus que les perturbations à filtrer sont importantes. Il est donc souhaitable que ces perturbations soient aussi réduites que possible.

Aussi , selon un autre aspect de l'invention, des moyens complémentaires sont prévus pour prévenir la production de parasites ou pour les atténuer.

Des perturbations peuvent d'abord être provoquées par les émetteurs de la carte manipulée. La connexion ou la déconnexion d'une carte s'accompagne en effet d'une phase transitoire pendant laquelle l'état de ses circuits est indéterminé. C'est le cas en particulier des émetteurs qui pourraient engendrer les signaux de sortie incontrolés. Pour éviter ce risque et selon une caractéristique supplémentaire de l'invention, on prévoit que chaque unité amovible étant reliée audit bus par l'intermédiaire d'un connecteur, les émetteurs des unités amovibles sont des émetteurs à trois états et chaque unité amovible comprend des moyens de commandes pour placer lesdits émetteurs à l'état de haute impédance durant les opérations de connexion ou de déconnexion des broches fonctionnelles dudit connecteur.

D'autre part, la mise sous tension de la carte connectée provoque une pointe de courant due à la charge capacitive des circuits alimentés et des réseaux d'alimentation. Cette pointe de courant se répercute au niveau des circuits qui alimentent aussi les autres unités qui sont donc susceptibles d'être perturbées de cette façon. Aussi pour éviter ce problème, et selon une autre caractéristique de l'invention, des moyens de filtrage sont prévus pour limiter cette pointe de courant.

D'autres caractéristiques et détails de réalisation de l'invention seront exposés dans la suite de la description en relation avec les figures où :
- la figure 1 représente de façon schématique un système électronique servant de cadre à l'invention ;
- la figure 2 représente une carte électronique avec ses moyens d'interface pour la relier à un bus ;
- la figure 3 représente les éléments d'une carte selon un mode de réalisation préférentiel de l'invention ;
- la figure 4 représente une réalisation CMOS d'un dispositif de réception selon l'invention ;
- la figure 5 représente les moyens de commande de mise à l'état de haute impédance des émetteurs d'une carte ;
- la figure 6 est un chronogramme permettant d'expliquer le fonctionnement des moyens de commande de la figure 5 ;
- la figure 7 représente de façon fonctionnelle un connecteur pouvant servir à la mise en oeuvre de l'invention.

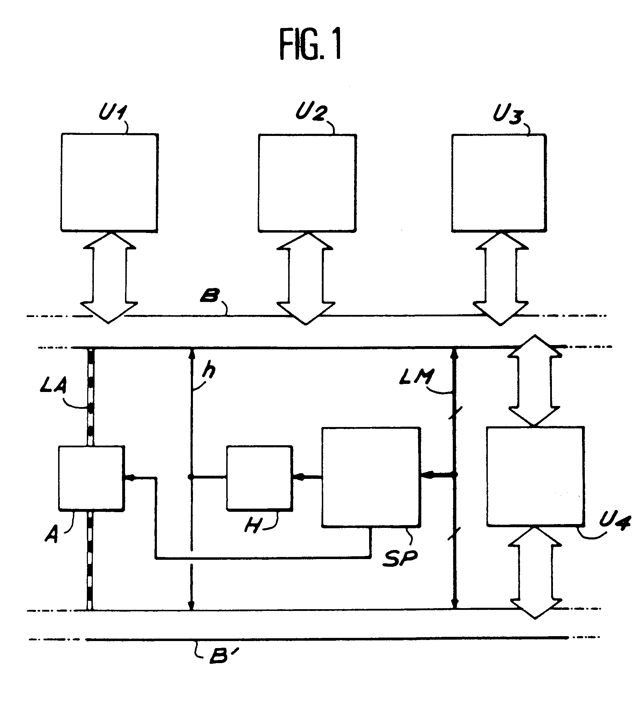

La figure 1 représente un système électronique permettant de définir le cadre dans lequel se situe l'invention. A titre d'exemple non limitatif, le système représenté est un sous-système central d'un ordinateur. Un tel système comprend habituellement une pluralité de processeurs, plusieurs cartes mémoires et un certain nombre d'unités d'entrée-sortie. Toutes ces unités U1, U2, U3 communiquent entre elles par un bus B appelé "bus fond de panier". On peut également prévoir un ou plusieurs autres bus B' sur lesquels sont reliées d'autres unités (non représentées) de façon à étendre la capacité du système. Dans ce cas, des unités particulières U4 possèdent des fonctions prévues pour réaliser les communications entre les bus.

Le système comporte aussi un processeur de service SP servant notamment à l'initialisation du système et aux opérations de maintenance. Le processeur de service SP comporte des moyens d'affichage et de commande permettant la communication du système avec un opérateur. Pour commander certaines opérations de maintenance, le processeur de service SP est relié aux diverses unités U1, U2, U3, U4 par des lignes de maintenance LM, appelées "canal de maintenance", qui rejoignent les bus B, B' . Chaque unité comporte des circuits de maintenance (non représentés) reliés à ces lignes au niveau du bus. Ces circuits de maintenance permettent d'effectuer des diagnostics et de faire exécuter par les unités les opérations de maintenance commandées par le processeur de service. Comme exemple d'opération de maintenance, on peut citer les tests non fonctionnels qui permettent de vérifier le bon fonctionnement des circuits contenus dans chacune des unités et éventuellement de localiser les défauts. Le processeur de service peut également être relié au système de la même façon qu'un terminal par l'intermédiaire d'une unité d'entrée-sortie. Ce mode de liaison (non représenté) permet d'effectuer des tests fonctionnels en lancant des programmes de tests.

Dans l'exemple représenté, le système comporte également un circuit d'horloge H fournissant des signaux de synchronisation h aux unités, en particulier pour synchroniser les signaux transmis par les bus. Ces signaux de synchronisation h sont distribués aux unités par l'intermédiaire des bus B, B'.

Le système comprend enfin un circuit d'alimentation A pour fournir toutes les tensions d'alimentation nécessaires aux circuits contenus dans les unités. Pour cela, les lignes d'alimentation LA issues du circuit d'alimentation A viennent rejoindre les bus B, B'.

Bien entendu, le processeur de service SP peut être relié au circuit d'horloge H et au circuit d'alimentation A pour commander ces circuits.

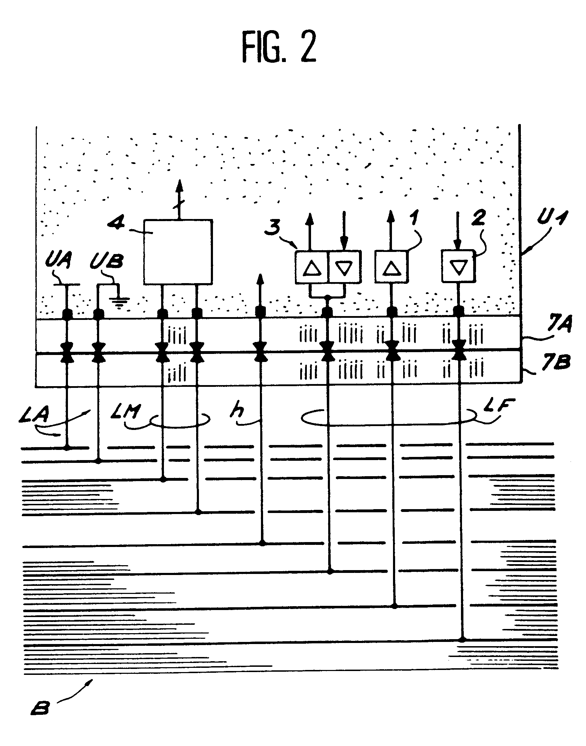

La figure 2 montre avec plus de détails les différents types de liaisons entre un bus B et une des cartes U1.

Une première catégorie de liaisons est constituée par l'ensemble des lignes d'alimentation LA fournissant à la carte les potentiels de tension UA et de masse UB.

D'autres liaisons sont formées par les lignes de maintenance LN permettant la communication entre le processeur de service SP et le circuit de maintenance 4 associé à l'unité. La ou les liaisons h transmettent le ou les signaux d'horloge. Enfin, des lignes fonctionnelles LF sont reliées aux entrées des récepteurs 1, 3 et aux sorties des émetteurs 2, 3 de l'unité.

Il convient de noter que la figure 2 n'est qu'une représentation schématique où, pour des raisons de clarté, les différentes catégories de lignes sont représentées séparées. En réalite, pour des raisons technologiques, ces lignes peuvent être disposées différemment. En particulier, les lignes d'alimentation, qui peuvent être en grand nombre, sont habituellement placées de façon à répartir au mieux la distribution de l'énergie au niveau du bus et des cartes.

Pour faciliter les opérations de montage et de remplacement, l'unité U1 se présente sous la forme d'une carte électronique comportant une pluralité de plots eux-mêmes reliés à un corps 7A d'un connecteur dont l'autre corps 7B est branché sur le bus B.

Il est clair qu'avec ce type de liaison, la déconnexion ou connexion d'une carte pendant que le reste du système continue à fonctionner risque de provoquer des perturbations inacceptables. Nous avons déjà signalé que la méthode habituellement utilisée pour éviter ce problème consiste à interrompre le fonctionnement du système, ou du moins tout ce qui implique la transmission de signaux sur le bus, pendant toute la durée de l'intervention. On réalise cela en gelant les signaux d'horloge qui synchronisent les émissions sur le bus. Compte tenu des inconvénients de cette méthode, il convient de rechercher des moyens pour permettre les opérations de connexion et de déconnexion de cartes du système sans interrompre son fonctionnement.

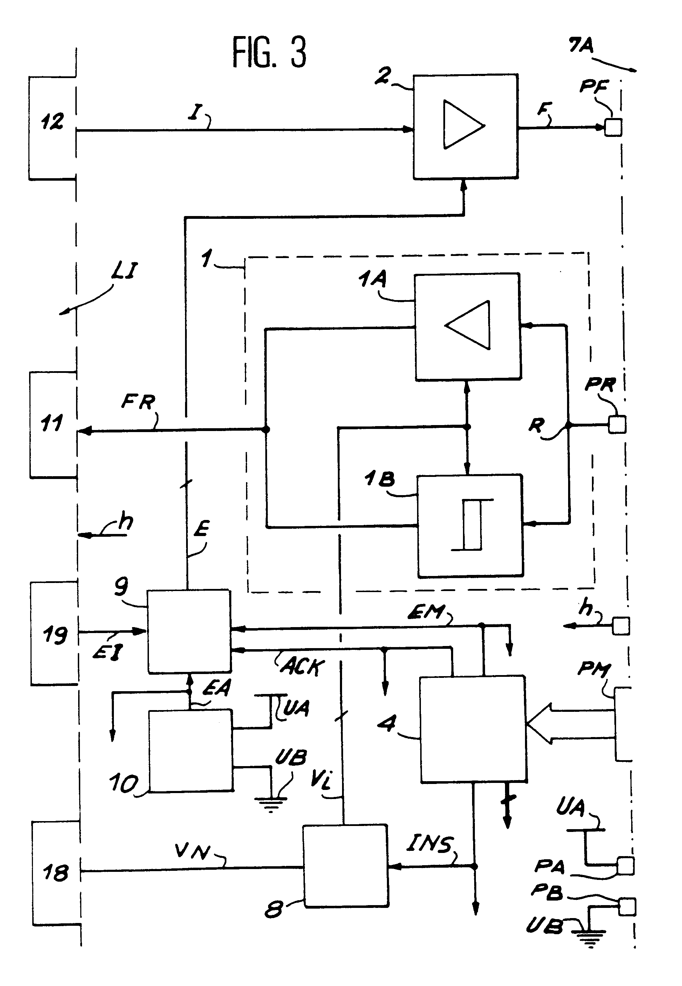

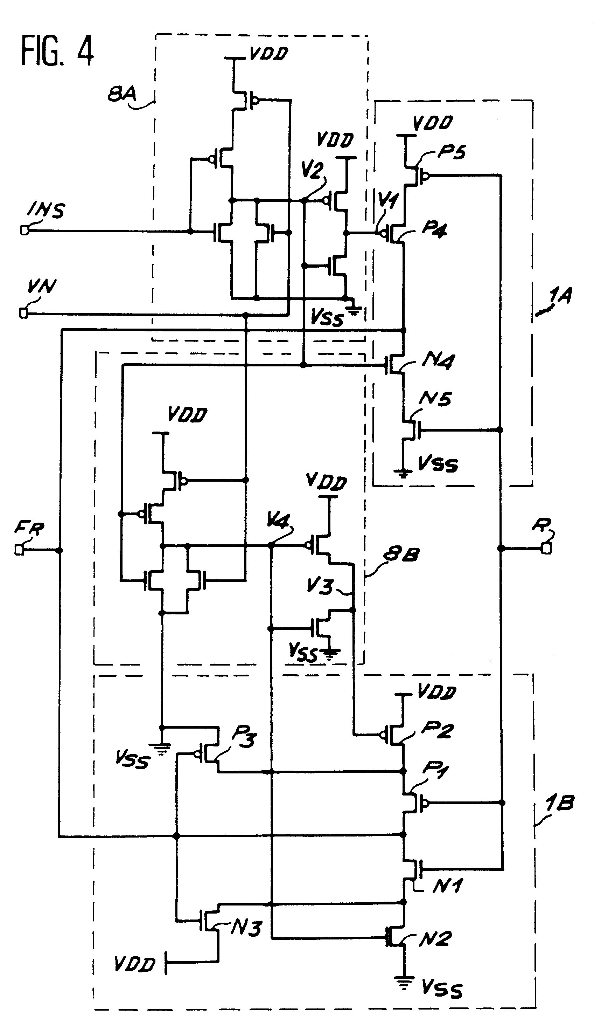

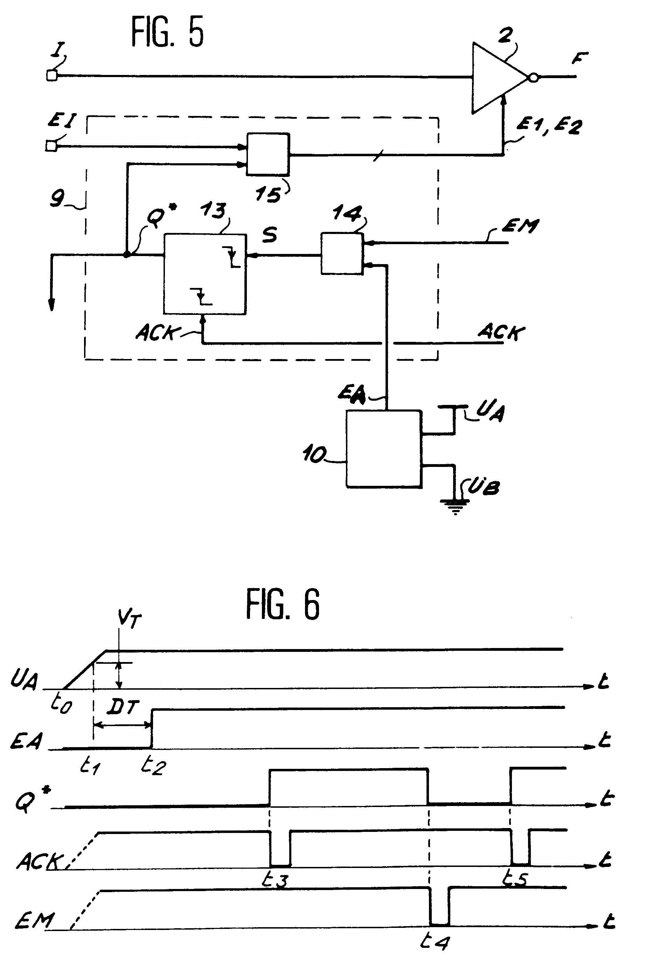

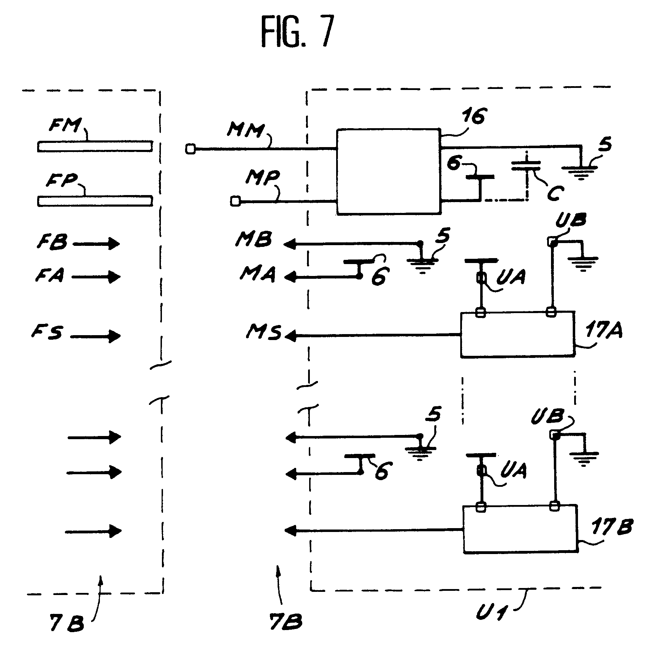

Pour atteindre cet objectif et selon l'invention, il est proposé de résoudre les problèmes suivants :
1) renforcement de l'immunité aux bruits et aux parasites de tous les récepteurs reliés au bus sur lequel une manipulation de cartes est effectuée (figure 3 et 4) ;
2) mesures complémentaires visant à supprimer ou du moins à atténuer les causes principales de perturbation :
   - moyens pour empêcher les émetteurs de la carte en cours de connexion ou de déconnexion d'émettre de façon incontrôlée (figures 3 et 5)
   - moyens pour assurer une mise sous tension progressive de la carte connectée (figure 7).

La figure 3 représente de façon plus détaillée les moyens spécifiques d'une carte qui permettront de réaliser l'invention.

Au niveau de l'interface de la carte avec le bus, on trouve généralement des dispositifs d'émission 2 et des dispositifs de réception 1. Pour simplifier l'exposé, un seul de chacun de ces dispositifs a été représenté. Le signal de sortie F du dispositif d'émission 2 est disponible sur un plot PF. Ce plot est relié à une broche associée du corps 7A du connecteur. De façon analogue, le signal d'entrée R du dispositif de réception 1 est reçu à partir d'une broche du corps 7A par l'intermédiaire d'un plot associé PR.

Les dispositifs d'émission et de réception sont aussi reliés à des circuits 12, 11 de la logique interne LI de la carte. Par exemple, le circuit de sortie 12 délivre le signal I à l'entrée du dispositif d'émission 2 et le circuit d'entrée 11 reçoit le signal FR apparaissant en sortie du dispositif de réception 1.

Généralement, la carte communique avec le processeur de service grâce à un circuit de maintenance 4 relié aux lignes de maintenance par l'intermédiaire de plots PM. Dans les systèmes complexes, il est habituel de prévoir un tel circuit qui permet de décentraliser les fonctions du processeur de service. Bien que le circuit 4 ait été représenté sur la figure sous la forme d'un circuit isolé, il est le plus souvent réalisé de façon répartie, certain de ses circuits pouvant être intégrés à l'intérieur des circuits intégrés de la carte. Quelle que soit la réalisation effective de circuit de maintenance, son rôle est toujours de recevoir et de décoder les ordres founis par le processeur de service et d'engendrer les signaux de commande correspondant à ces ordres.

En ce qui concerne le problème spécifique concerné par la présente invention, les seules fonctions du circuit de maintenance qui sont indispensables sont d'abord celles qui concernent la commande des modes lents et rapides des récepteurs et accessoirement celles qui commandent la mise à l'état de haute impédance des émetteurs.

Chaque dispositif de réception 1 de la carte est constitué d'un premier récepteur 1A utilisé lorsque le système fonctionne normalement. Ce récepteur 1A, appelé "récepteur rapide", est associé à un second récepteur 1B, appelé "récepteur lent", conçu de façon à mieux filtrer les parasites pouvant entacher les signaux reçus. Une description détaillée de ces circuits sera donnée ultérieurement en référence à la figure 4. L'activation de l'un ou l'autre des récepteurs est commandée par les signaux Vi issus d'un circuit 8 de commande d'état des récepteurs. Un mode de réalisation détaillée de ce circuit 8 est également représenté sur la figure 4.

En réponse aux ordres reçus du processeur de service, le circuit de maintenance 4 délivre un signal INS dont la valeur logique indique si les récepteurs doivent être placés en mode lent ou en mode rapide. Ce signal INS est reçu par les circuits 8 associés aux dispositifs de réception de la carte. Chaque circuit 8 reçoit également le signal VN d'un circuit 18 de la logique interne LI. Le signal VN sert à mettre à l'état de haute impédance les deux récepteurs 1A, 1B du dispositif de réception 1 considéré.

Chaque carte amovible du système comporte aussi pour chaque dispositif d'émission 2 qu'elle contient un circuit 9 de commande d'état de l'émetteur délivrant des signaux E pour actionner la mise à l'état de haute impédance. Le circuit 9 reçoit d'un circuit 19 de la logique interne un signal EI servant à commander l'isolation du dispositif d'émission. Le circuit 9 reçoit également les signaux EM et ACK du circuit de maintenance 4. Le circuit 9 reçoit enfin le signal EA d'un circuit 10 de détection de tension d'alimentation UA, UB. La réalisation des circuits 9 et 10 ainsi que leur fonctionnement seront exposés ultérieurement en relation avec les figures 5 et 6.

Les circuits de la carte sont alimentés par l'intermédiaire de plots d'alimentation PA, PB reliés aux lignes d'alimentation LA. Ces plots d'alimentation sont reliés à un réseau d'alimentation des circuits de la carte. Bien que cela n'apparaisse pas sur la figure, on prévoit généralement un nombre important de plots d'alimentation, ce nombre étant fonction du nombre de circuits de la carte.

La carte reçoit enfin, par l'intermédiaire du connecteur le ou les signaux d'horloge h qui sont utilisés par la logique interne pour sa synchronisation.

Le fonctionnement du dispositif de la figure 3 est le suivant. Lorsqu'une déconnexion ou connexion d'une carte du système doit être effectuée, le processeur de service abaisse la fréquence des signaux h de l'norloge H. Il en résulte que les dispositifs d'émission 2 fonctionneront à une fréquence inférieure à la fréquence normale. D'autre part, le processeur de service envoie au circuit de maintenance 4 de chaque carte du bus autre que celle subissant une déconnexion ou une reconnexion, des signaux pour l'informer que le fonctionnement des récepteurs lents doit être activé. Chaque circuit de maintenance 4 envoie alors un signal INS à chaque circuit 8 de commande d'état du récepteur. Chaque circuit 8 fournit alors les signaux Vi au récepteur rapide 1A pour le mettre à l'état de haute impédance et au récepteur lent 1B pour le rendre actif.

Dans le cas d'une déconnexion, le processeur de service SP envoie au circuit de maintenance 4 de la carte destinée à être déconnectée des signaux pour commander la mise à l'état de haute impédance des émetteurs. En fonction de ces signaux, le circuit de maintenance 4 de cette carte active le signal EM. En réponse à ce signal , le circuit 9 envoie alors les signaux E commandant la mise à l'état de haute impédance de l'émetteur.

Lorsque l'opération est terminée, le processeur de service SP effectue les opérations inverses : les récepteurs rapides 1A sont remis à l'état actif tandis que les récepteurs lents sont remis à l'état de haute impédance et la fréquence des signaux d'horloge est ensuite rétablie à sa valeur normale.

Si l'opération consiste à connecter une carte, le circuit 10 de détection de tension d'alimentation de cette carte fournit automatiquement le signal EA aux circuits 9 de la carte. Chaque circuit 9 est alors verrouillé pour maintenir à l'état de haute impédance le dispositif d'émission 2 associé. Lorsque l'opération de connexion est terminée et sous la commande du processeur de service, le circuit de maintenance 4 fournit alors aux circuits 9 un signal ACK permettant de les déverrouiller.

Pour réaliser le changement de fréquence d'horloge mentionné précédemment, on peut prévoir des diviseurs de fréquence reliés aux circuits d'horloge. L'obtention de signaux d'horloge à plus basse fréquence se fera donc par la sélection, commandée par le processeur de service, des signaux de sortie de ces diviseurs. Ce mode de réalisation ne présente aucune difficulté pratique et ne sera donc pas détaillé davantage.

La figure 4 représente un exemple de réalisation en technologie CMOS du dispositif de réception 1 et du circuit 8 de commande d'état des récepteurs de la figure 3.

Le récepteur rapide 1A est un inverseur CMOS à trois états constitué de deux transistors N-MOS N4, N5 et de deux transistors P-MOS P4, P5.

Le récepteur lent 1B est réalisé au moyen d'un trigger de Schmitt à trois états et composé des transistors N-MOS N1, N2, N3 et des transistors P-MOS P1, P2, P3.

L'inverseur 1A et le trigger de Schmitt 1B étant des circuits bien connus en soi, des explications supplémentaires concernant leur constitution et leur fonctionnement sont inutiles.

Le circuit de commandes d'état des récepteurs 8 se décompose en deux circuits 8A, 8B formés chacun d'une porte NOR suivie d'un inverseur. La porte NOR du circuit 8A reçoit en entrée les signaux INS et VN définis précédemment et délivre le signal V2 qui est appliqué à l'entrée de l'inverseur, ce dernier fournissant en sortie le signal V1. Les signaux complémentaires V1 et V2 sont appliqués respectivement à la grille du transistor P4 et à celle du transistor N4 de l'inverseur 1A.

Les signaux VN et V2 sont appliqués aux entrées de la porte NOR du circuit 8B. Cette porte fournit le signal V4 appliqué à l'entrée de l'inverseur qui délivre le signal V3. Les signaux V3 et V4 sont appliqués respectivement à la grille du transisor P2 et à celle du transistor N2 du trigger de Schmitt 1B.

L'entrée de l'inverseur 1A et celle du trigger de Schmitt 1B sont reliées entre elles pour former l'entrée R du dispositif de réception. De même, les sorties de ces circuits sont reliées entre elles pour former la sortie FR du dispositif de réception.

Le circuit de la figure 4 fonctionne de la façon suivante. Lorsque le signal VN prend la valeur 1 logique, c'est-à-dire est à l'état haut, les signaux V1 et V3 sont à l'état haut tandis que les signaux V2 et V4 sont à l'état bas. Il en résulte que les transistors P2, P4, N2, N4 sont bloqués. Les deux circuits 1A et 1B sont par conséquent à l'état de haute impédance. Si les signaux VN et INS prennent la valeur zéro logique, c'est-à-dire sont à l'état bas, les signaux V1 et V4 sont à l'état bas tandis que les signaux V2 et V3 sont à l'état haut. Il en résulte que seul le trigger de Schmitt 1B est à l'état de haute impédance. Si le signal VN est à l'état bas et le signal INS à l'état haut, les signaux V2 et V3 sont à l'état bas et les signaux V1 et V4 sont à l'état haut. Dans ce cas, seul l'inverseur 1A est à l'état de haute impédance.

Les caractéristiques de filtrage de récepteur lent 1B doivent être choisies en tenant compte du niveau des perturbations qui sont susceptibles de se produire pendant les opérations de connexion ou de déconnexion. Ces caractéristiques peuvent être obtenues par un dimensionnement approprié des transistors constituant le trigger de Schmitt. En effet, en jouant sur la largeur de diffusion des transistors MOS du circuit, on peut fixer leur résistance drain-source. En particulier les seuils de déclenchement haut et bas seront fixés respectivement par le dimensionnement des transistors N2, N3 et P2, P3. D'autre part, on pourra ajuster la constante de temps du circuit en choisissant une valeur appropriée pour la résistance drain-source des transistors P1, P2, N1, N2. Bien entendu, le choix de ces résistances devra tenir compte des caractéristiques de la charge du récepteur.

En ce qui concerne les caractéristiques de seuil du trigger de Schmitt, en technologie CMOS travaillant entre 0 et 5 volts, on pourra par exemple choisir un seuil bas de 1,5 volts et un seuil haut de 3,5 volts, ce qui permet d'assurer le filtrage de parasites d'amplitude pouvant atteindre 3 volts.

La figure 5 montre un exemple de réalisation d'un dispositif d'émission 2 associé à son circuit 9 de commandes d'état.

L'émetteur 2 peut être réalisé au moyen d'un inverseur CMOS à trois états de constitution analogue à celle du récepteur rapide 1A. Le récepteur 2 est mis à son état de haute impédance en réponse aux signaux complémentaires E1 et E2 délivrés par le circuit 9.

Le circuit 9 comporte une porte ET 14 dont une première entrée reçoit le signal EM normalement à l'état haut issu du dispositif de maintenance 4. Une seconde entrée de la porte 14 reçoit le signal EA normalement à l'état haut issu du circuit 10 de détection de tension. La porte 14 délivre le signal S à l'entrée d'armement d'une bascule 13 à déclenchement par les fronts descendants. L'entrée de remise à zéro de la bascule 13 reçoit le signal ACK normalement à l'état haut du circuit de maintenance 4. La sortie inverseuse Q* de la bascule 13 est reliée à une première entrée d'un circuit 15 dont la seconde entrée reçoit le signal EI normalement à l'état haut issu de la logique interne. Le circuit 15 est par exemple constitué par une porte ET suivie d'un inverseur, la sortie de la porte ET fournissant le signal E1 et la sortie de l'inverseur fournissant le signal complémentaire E2. Les signaux E1 et E2 seront alors appliqués aux entrées de commandes d'état de l'inverseur 2 de façon à le placer à l'état de haute impédance lorsque le signal E1 est dans son état bas. Bien entendu, d'autres modes de réalisation équivalents pourront être aussi utilisés.

On peut remarquer que les signaux EM, ACK, EA et Q* ne sont pas spécifiques à un émetteur particulier de la carte. Il peut être par conséquent plus avantageux de concevoir le circuit 9 en deux parties. Une première partie commune à toute la carte ou du moins à plusieurs émetteurs est composée de la bascule 13 et de la porte 14 tandis qu'une seconde partie associée à chaque émetteur est formée du seul circuit 15 recevant le signal Q* du circuit commun 13, 14.

Le circuit 10 est un circuit qui fournit un signal EA ayant la valeur 1 logique après que la différence de potentiel qu'il reçoit à ses bornes a dépassé un seuil VT déterminé. A titre d'exemple, on pourra utiliser le circuit PCF 1252 commercialisé par la Société Philips. Les entrées du circuit 10 sont reliées au plan de masse UB et au plan de potentiel UA de la carte.

Le fonctionnement du circuit de la figure 5 sera maintenant décrit à l'aide des chronogrammes de la figure 6. Ces chronogrammes correspondent au cas d'une mise sous tension de la carte à l'instant t0 puis au cas d'une commande d'isolement des émetteurs à l'instant t4. A partir de l'instant t0, la tension d'alimentation UA croît et atteint un seuil VT à l'instant t1. Après un retard DT de stabilisation que l'on peut imposer au circuit 10, ce circuit positionne à l'instant t2 le signal EA à l'état haut. Ce signal EA est transmis par l'intermédiaire de la porte 14 à l'entrée d'armement S de la bascule 13 mais ne provoque pas le changement de son état. La sortie Q* reste donc à l'état bas. Par conséquent, les signaux E1, E2 maintiennent l'inverseur 2 dans son état de haute impédance. A l'instant t3, le circuit de maintenance, sous la commande du processeur de service, fait redescendre le signal ACK, ce qui a pour effet de remettre à zéro la bascule 13. Le signal Q* passe donc à l'état haut permettant ainsi un fonctionnement normal à l'inverseur 2. L'état de l'inverseur 2 ne dépend plus que de la logique interne par l'interinédiaire du signal EI.

En vue de préparer l'opération de déconnexion d'une carte, le verrouillage à l'état de haute impédance de l'émetteur 2 peut être provoqué par le circuit de maintenance par mise à l'état bas du signal EM normalement à l'état haut. Ce cas est représenté sur la figure 6 à partir de l'instant t4. Le front descendant du signal EM est transmis par la porte ET 14 à l'entrée d'armement de la bascule 13 dont la sortie Q* repasse à zéro.

Comme précédemment, cette commande peut être annulée à l'instant t5 par le signal ACK, à condition bien sûr que le signal EA soit resté à l'état haut.

Dans le cas d'une baisse de tension d'alimentation en dessous du seuil VT, le circuit 10 placerait son signal de sortie EA à l'état bas, ce qui provoquerait le changement d'état de la bascule.

La figure 7 constitue une représentation fonctionnelle d'un connecteur 7A, 7B selon un mode de réalisation particulier de l'invention.

La carte U1 est constituée d'une pluralité de circuits de la logique interne et de circuits d'interface symbolisés par les deux éléments 17A, 17B. Chaque circuit d'interface 17A est relié électriquement à la partie mâle 7A du connecteur. La sortie ou l'entrée de chaque circuit d'interface est reliée par le réseau d'interconnexion de la carte à une broche fonctionnelle MS du corps 7A. Des broches d'alimentation MA, MB servent à fournir les tensions d'alimentation à tous les circuits de la carte. A chaque broche d'alimentation MA, MB ou fonctionnelle MS est associé un contact femelle FA, FB, FS du corps femelle 7B.

Selon l'invention, il est prévu deux broches d'alimentation particulières MM, MP plus longues que toutes les autres. L'une d'entre elles est une broche de tension MP, l'autre étant une broche de masse MM. On prévoit en outre que la broche de masse MM est plus longue que la broche de potentiel MP. L'intérêt de cette disposition est d'assurer l'alimentation avant la connexion ou après la déconnexion des broches fonctionnelles et des autres broches d'alimentation. Ceci permet de maintenir les émetteurs de la carte déconnectée ou connectée dans un état bien défini comme cela a déjà été expliqué en référence à la figure 5.

D'autre part, pour assurer l'alimentation de tous ses circuits, la carte est normalement munie d'un plan de potentiel 6 et d'un plan de masse 5 auxquels sont reliées respectivement les broches de potentiel MA et les broches de masse MB. Chaque circuit de la carte est muni de bornes de tension UA et de masse UB reliées respectivement au plan de potentiel 6 et au plan de masse 5 par un réseau d'alimentation implanté dans la carte.

Selon l'invention, on prévoit que les broches plus longues MM et MP sont reliées aux plans de masse 5 et de potentiel 6 par des moyens de filtrage 16 ayant pour effet d'augmenter la constante de temps du réseau d'alimentation. Ainsi, avant la connexion des broches courtes de la carte, la mise sous tension des circuits par l'intermédiaire des broches MM et MP se fera progressivement en limitant l'appel de courant imposé au circuit d'alimentation. Cette mesure permet d'éviter les bruits qui seraient générés par l'intermédiaire du circuit d'alimentation.

La réalisation détaillée du connecteur 7A, 7B et des moyens de filtrage 16 sont à la portée de l'homme du métier et ne nécessitent donc pas de développements supplémentaires. En particulier, les moyens de filtrage 16 pourraient être réalisés au moyen d'un circuit limiteur de courant du commerce choisi évidemment en fonction de l'impédance C du réseau d'alimentation.

## Revendications

1. Système électronique comportant au moins un bus (B, B') pour relier entre elles plusieurs unités (U1, U2, U3, U4) du système, chaque unité coopérant avec un dispositif de maintenance (SP), une ou plusieurs desdites unités (U1) étant connectées audit bus de façon amovible, des premiers moyens (4) commandés sélectivement par ledit dispositif de maintenance (SP) étant prévus pour assurer l'isolement fonctionnel desdites unités amovibles (U1), ledit système étant caractérisé en ce que pour pouvoir effectuer la déconnexion ou la connexion desdites unités amovibles (U1) sans interrompre le fonctionnement des unités respectivement restant connectées ou déjà connectées au bus (B, B'), des seconds moyens (8, 1A, 1B) sont prévus dans les dispositifs de réception (1) desdites unités (U1, U2, U3, U4) pour leur permettre de fonctionner soit selon un mode de fonctionnement normal, soit selon un mode qui procure auxdits dispositifs de réception (1) une immunité accrue aux perturbations, lesdits seconds moyens (8, 1A, 1B) étant commandés par ledit dispositif de maintenance (SP).

2. Système électronique selon la revendication précédente, caractérisé en ce que chacun desdits dispositifs de réception comporte un récepteur servant au fonctionnement normal et appelé récepteur rapide (1A), ainsi qu'un récepteur auxiliaire muni de moyens de filtrage et appelé récepteur lent (1B) et en ce que ledit dispositif de maintenance (SP) interdit le fonctionnement desdits récepteurs rapides (1A) lorsqu'il autorise le fonctionnement desdits récepteurs lents (1B) et réciproquement et en ce que les dispositifs d'émission (2) sont commandés pour fonctionner en mode lent pendant le fonctionnement des récepteurs lents (1B) et en mode rapide pendant le fonctionnement des récepteurs rapides (1A).

3. Système électronique selon la revendication précédente, caractérisé en ce qu'il comporte une horloge (H) délivrant des signaux (h) de synchronisation des signaux véhiculés par ledit bus (B) et en ce que, sous la commande du dispositif de maintenance (SP) ladite horloge (H) peut fonctionner à une fréquence normale ou à une fréquence inférieure, le fonctionnement de l'horloge à la fréquence normale ou à la fréquence inférieure correspondant respectivement au mode de fonctionnement rapide ou lent des dispositifs d'émission (2).

4. Système électronique selon la revendication précédente, caractérisé en ce que chaque récepteur rapide (1A) comprend un inverseur (N4, N5, P4, P5) à trois états et en ce que chaque récepteur lent (1B) comprend un trigger de Schmitt (N1, N2, N3, P1, P2, P3) à trois états, l'état de haute impédance de l'inverseur ou du trigger de Schmitt étant commandé par ledit dispositif de maintenance (SP).

5. Système électronique selon la revendication précédente, caractérisé en ce que ledit trigger de Schmitt (N1, N2, N3, P1, P2, P3) est un circuit dimensionné de façon à introduire une constante de temps suffisamment élevée pour filtrer les perturbations susceptibles d'affecter les signaux reçus.

6. Système électronique selon l'une des revendications précédentes, caractérisé en ce que chaque unité amovible (U1) est reliée audit bus par l'intermédiaire d'un connecteur (7A, 7B), en ce que les émetteurs (2) des unités amovibles (U1) sont des émetteurs à trois états et en ce que chaque unité amovible (U1) comprend des moyens de commandes (9, 10) pour placer lesdits émetteurs (2) à l'état de haute impédance durant les opérations de connexion ou de déconnexion des broches fonctionnelles dudit connecteur (7A, 7B).

7. Système électronique selon la revendication précédente, caractérisé en ce que ledit connecteur comporte un corps mâle (7A) comprenant au moins une broche de masse (MM) et une broche de tension (MP) plus longues que les autres broches (MA, MB, MS) dudit connecteur et en ce que lesdits moyens de commandes (9, 10) de mise à l'état de haute impédance des émetteurs (2) commandent la mise à l'état de haute impédance des émetteurs en fonction de la tension qui existe aux bornes desdites broches longues (MM, MP).

8. Système électronique selon la revendication précédente, caractérisé en ce que ladite broche de masse (MM) est plus longue que ladite broche de tension (MP).

9. Système électronique selon la revendication précédente, caractérisé en ce que les bornes d'alimentation (UA, UB) des circuits (17A, 17B) appartenant à chaque unité amovible (U1) sont reliés respectivement auxdites broches plus longues par l'intermédiaire de moyens de filtrage (16, C) augmentant la constante de temps du réseau d'alimentation desdits circuits.

10. Système électronique selon la' revendication précédente, caractérisé en ce que ledit réseau d'alimentation comprend un plan de masse (5) et un plan de potentiel (6), reliés respectivement auxdites broches plus longues (MM, MP) par l'intermédiaire d'un circuit limiteur de courant (16).

## Claims

1. An electronic system comprising at least one bus (B, B') to connect several units (U1, U2, U3, U4) of the system to one another, each unit cooperating with a maintenance device (SP), one or several of said units (U1) being removably connected to said bus, first means (4) controlled selectively by said maintenance device (SP) being provided to assure the functional isolation of said removable units (U1), said system being characterised in that to be able to carry out the disconnection or the connection of said removable units (U1) without interrupting the functioning of the units remaining connected or already connected to the bus (B, B') respectively, second means (8, 1A, 1B) are provided in the reception devices (1) of said units (U1, U2, U3, U4) to allow them to function either according to a normal functioning mode, or according to a mode which procures an increased immunity to perturbations for said reception devices (1), said second means (8, 1A, 1B) being controlled by said maintenance device (SP).

2. An electronic system according to the preceding claim, characterised in that each of said reception devices includes a receiver being used for normal functioning and called a fast receiver (1A), as well as an auxiliary receiver equipped with filtering means and called a slow receiver (1B), and in that said maintenance device (SP) prohibits the functioning of said fast receivers (1A) when it authorises the functioning of said slow receivers (1B), and vice versa, and in that the transmission devices (2) are controlled to function in a slow mode during the functioning of the slow receivers (1B) and in a fast mode during the functioning of the fast receivers (1A).

3. An electronic system according to the preceding claim, characterised in that it comprises a clock (H) furnishing signals (h) for synchronisation of the signals carried by said bus (B), in that said clock (H) can function at a normal frequency or at a lower frequency under the control of the maintenance device (SP), the functioning of the clock at the normal frequency or the lower frequency corresponding to the mode of fast or slow functioning, respectively, of the transmission devices (2).

4. An electronic system according to the preceding claim, characterized in that each fast receiver (1A) comprises an inverter (N4, N5, P4, P5) with three states, and that each slow receiver (1B) comprises a Schmitt trigger (N1, N2, N3, P1, P2, P3) with three states, the high-impedance state of the inverter or Schmitt trigger being controlled by said maintenance device (SP).

5. An electronic system according to the preceding claim, characterized in that said Schmitt trigger (N1, N2, N3, P1, P2, P3) is a circuit dimensioned such as to introduce a sufficiently raised time constant to filter the perturbations likely to affect the signals received.

6. An electronic system according to one of the preceding claims, characterized in that each removable unit (U1) is connected to said bus via a connector (7A, 7B), in that the transmitters (2) of the removable units (U1) are three-state transmitters, and in that each removable unit (U1) comprises control means (9, 10) for setting said transmitters (2) to the high-impedance state during the operations of connection or disconnection of the functional pins of said connector (7A, 7B).

7. An electronic system according to the preceding claim, characterised in that said connector comprises a male body (7A) including at least one ground pin (MM) and one voltage pin (MP) longer than the other pins (MA, MB, MS) of said connector, and in that said control means (9, 10) for setting the transmitters (2) to the high-impedance state control the setting of the transmitters to the high-impedance state as a function of the voltage which exists at the terminals of said long pins (MM, MP).

8. An electronic system according to the preceding claim, characterized in that said ground pin (MM) is longer than said voltage pin (MP).

9. An electronic system according to the preceding claim, characterized in that the supply terminals (UA, U) of the circuits (17A, 17B) belonging to each removable unit (U1) are connected respectively to said longer pins via filtering means (16, C) that increase the time constant of the supply network of said circuits.

10. An electronic system according to the preceding claim characterized in that said supply network comprises a ground plane (5) and a potential plane (6), connected respectively to said longer pins (MM, MP) via a current limiter circuit (16).

## Patentansprüche

1. Elektronisches System, mit wenigstens einem Bus (B, B') für die gegenseitige Verbindung mehrerer Einheiten (U1, U2, U3, U4) des Systems, wobei jede Einheit mit einer Wartungseinheit (SP) zusammenwirkt, wobei eine oder mehrere der Einheiten (U1) mit dem Bus lösbar verbunden sind, wobei erste Mitte (4) die wahlweise von der Wartungseinrichtung (SP) gesteuert werden, vorgesehen sind, um die funktionale Isolierung der lösbaren Einheiten (U1) zu gewährleisten, wobei das System dadurch gekennzeichnet ist daß in den Empfangseinrichtungen (1) der Einheiten (U1, U2, U3, U4) zweite Mittel (8, 1A, 1B) vorgesehen sind, um die Abkopplung oder die Ankopplung der lösbaren Einheiten (U1) ausführen zu können, ohne den Betrieb der mit dem Bus (B, B') verbunden bleibenden bzw. bereits verbundenen Einheiten zu unterbrechen, um den Einheiten (U1, U2, U3, U4) einen Betrieb entweder gemäß einer normalen Betriebsart oder gemäß einer Betriebsart zu ermöglichen, die den Empfangeinrichtungen eine erhöhte Unempfindlichkeit gegen Störungen verleiht, wobei die zweiten Mittel (8, 1A, 1B) von der Wartungseinrichtung (SP) gesteuert werden.

2. Elektronisches System gemäß dem vorangehenden Anspruch, dadurch gekennzeichnet, daß jede der Empfangseinrichtungen einen dem Normalbetrieb dienenden und schneller Empfänger (1A) genannten Empfänger sowie einen Hilfsempfänger enthält, der mit Filterungsmitteln versehen ist und langsamer Empfänger (1B) genannt wird, und daß die Wartungseinrichtung (SP) den Betrieb der schnellen Empfänger (1A) untersagt, wenn sie den Betrieb der langsamen Empfänger (1B) zuläßt, und umgekehrt, und daß die Sendeeinrichtungen (2) so gesteuert werden, daß sie während des Betriebs der langsamen Empfänger (1B) in einer langsamen Betriebsart und während des Betriebs der schnellen Empfänger (1A) in einer schnellen Betriebsart arbeiten.

3. Elektronisches System gemäß dem vorangehenden Anspruch, dadurch gekennzeichnet, daß es einen Taktgeber (H) enthält, der Synchronisationssignale (h) für die vom Bus (B) transportierten Signale ausgibt, und daß der Taktgeber (H) unter der Steuerung der Wartungseinrichtung (SP) mit einer normalen Frequenz oder mit einer niedrigen Frequenz arbeiten kann, wobei der Betrieb des Taktgebers mit der normalen Frequenz oder mit der niedrigen Frequenz der schnellen bzw. der langsamen Betriebsart der Sendeeinrichtungen (2) entspricht.

4. Elektronisches System gemäß dem vorangehenden Anspruch, dadurch gekennzeichnet, daß der schnelle Empfänger (1A) einen Inverter (N4, N5, P4, P5) mit drei Zuständen enthält und daß jeder langsame Empfänger (1B) einen Schmitt-Trigger (N1, N2, N3, P1, P2, P3) mit drei Zuständen enthält, wobei der Zustand mit hoher Impedanz des Inverters oder des Schmitt-Triggers von der Wartungseinrichtung (SP) gesteuert wird.

5. Elektronisches System gemäß dem vorangehenden Anspruch, dadurch gekennzeichnet, daß der Schmitt-Trigger (N1, N2, N3, P1, P2, P3) eine Schaltung ist, die so dimensioniert ist, daß eine ausreichend hohe Zeitkonstante eingeführt wird, um die Störungen zu filtern, die die empfangenen Signale beeinflussen können.

6. Elektronisches System gemäß einem der vorangehenden Ansprüche, dadurch gekennzeichnet, daß jede lösbare Einheit (U1) mit dem Bus über eine Verbindungseinrichtung (7A, 7B) verbunden ist, daß die Sender (2) der lösbaren Einheiten (U1) Sender mit drei Zuständen sind und daß jede lösbare Einheit (U1) Steuermittel (9, 10) enthält um die Sender (2) während der Ankopplungs- oder Abkopplungsoperationen der Funktionsstifte der Verbindungseinrichtung (7A, 7B) in den Zustand mit hoher Impedanz zu versetzen.

7. Elektronisches System gemäß dem vorangehenden Anspruch, dadurch gekennzeichnet, daß die Verbindungseinrichtung einen Steckerkörper (7A) aufweist, der wenigstens einen Massestift (MM) und einen Spannungsstift (MP) umfaßt, die länger als die anderen Stifte (MA, MB, MS) der Verbindungseinrichtung sind, und daß die Steuermittel (9, 10) für die Versetzung der Sender (2) in den Zustand hoher Impedanz die Versetzung der Sender in den Zustand hoher Impedanz in Abhängigkeit von der Spannung steuern, die an den Anschlüssen der längeren Stifte (MM, MP) anliegt.

8. Elektronisches System gemäß dem vorangehenden Anspruch, dadurch gekennzeichnet, daß der Massestift (MM) länger als der Spannungsstift (MP) ist.

9. Elektronisches System gemäß dem vorangehenden Anspruch, dadurch gekennzeichnet, daß die Versorgungsanschlüsse (UA, UB) der Schaltungen (17A, 17B), die jeder lösbaren Einheit (U1) zugehören, mit den längeren Stiften jeweils über Filterungsmittel (16, C) verbunden sind welche die Zeitkonstante des Versorgungsnetzes der Schaltungen erhöhen.

10. Elektronisches System gemäß dem vorangehenden Anspruch, dadurch gekennzeichnet, daß das Versorgungsnetz eine Masseebene (5) und eine Potentialebene (6) aufweist, die mit den entsprechenden längeren Stiften (MM, MP) über eine Strombegrenzungsschaltung (16) verbunden sind.
